# EUROPÄISCHE PATENTSCHRIFT

(11) **EP 0 548 731 B1**
(45) Veröffentlichungstag und Bekanntmachung des Hinweises auf die Patenterteilung: **03.04.1996**
(21) Anmeldenummer: 92121253.6
(22) Anmeldetag: 14.12.1992
(51) Int. Cl.: H01H 83/14

(54) **Fehlerstrom- und/oder Differenzstromschutzschalter**
Earth leakage and/or differential current circuit breaker
Disjoncteur à courant de défaut et/ou à courant différentiel

(30) Priorität: 24.12.1991 DE 4142970
(43) Veröffentlichungstag der Anmeldung: 30.06.1993
(73) Patentinhaber: ABB PATENT GmbH, D-68309 Mannheim (DE)
(72) Erfinder: Runtsch, Erhard, W-6944 Hemsbach (DE)
(74) Vertreter: Rupprecht, Klaus, Dipl.-Ing.

(56) Entgegenhaltungen:
- EP-A- 0 285 594
- EP-A- 0 412 401
- US-A- 4 042 967

## Beschreibung

Die Erfindung betrifft einen Fehlerstrom- und/oder Differenzstromschutzschalter nach dem Oberbegriff des Anspruches 1.

Es sind unterschiedliche Arten von Fehlerstrom- und/oder Differenzstromschutzschaltern bekannt geworden. Bei allen diesen Schaltgeräten ist ein Summenstromwandler vorhanden, dessen Primärwicklung durch die Netzleiter gebildet ist und dessen Sekundärwicklung auf einen Auslöser einwirkt, der die Verklinkung eines Schaltschlosses betätigt, über das elektrische Kontaktstellen in den Netzleitern geöffnet werden.

Wenn der Summenstromwandler so ausgebildet ist, daß die sekundärseitige Energie zur Betätigung eines Auslösers ausreicht, dann nennt man derartige Schutzschalter netzspannungsunabhängige Schutzschalter. Beabsichtigt man, die Empfindlichkeit des Fehlerstrom- und/oder Differenzstromschutzschalters zu erhöhen, dann wird über eine entsprechende Verstärkereinrichtung der Auslöser betätigt, in dem in der Sekundärwicklung des Stromwandlers ein Signal erzeugt wird, das über einen Thyristor einen Arbeitsstromauslöser an die Netzspannung legt. Der Arbeitsstromauslöser entklinkt das Schaltwerk des Schutzschalters und öffnet die Kontaktstücke.

Der Thyristor muß dabei aus Kosten- und Platzgründen für einen möglichst geringen Betriebsstrom gewählt werden, weswegen der Arbeitsstromauslöser eine hochohmige Spule mit hoher Windungszahl besitzen muß. Dadurch entstehen Probleme der Spannungsfestigkeit, die den Arbeitsstromauslöser verteuern und einen großen Platzbedarf erfordern.

Ein Fehlerstromschutzschalter der eingangs genannten Art ist aus der EP 0 285 594 A1 bekannt geworden.

Aufgabe der Erfindung ist es, einen Schutzschalter der eingangs genannten Art zu schaffen, bei dem eine sichere Auslösung des Schaltschlosses gewährleistet und darüberhinaus auch der Platzbedarf verringert ist.

Diese Aufgabe wird erfindungsgemäß gelöst durch die Merkmale des Anspruches 1.

Erfindungsgemäß also besitzt der Auslöser ein Element aus elektrostriktivem Material, dessen eines Ende ortsfest eingespannt ist und dessen anderes Ende aufgrund des sekundärseitigen Signales seine Lage verändern kann.

Das Element, das als piezokeramischer Streifenbieger oder piezokeramischer Scheibenbieger ausgebildet ist, ist elektrisch ein Kondensator. Dieser Kondensator lädt sich bei einem Auslösevorgang auf und muß vor jedem weiteren Auslenkungsvorgang entladen werden, da die natürliche Entladezeit zu lang wäre.

Demgemäß wird elektrisch parallel zu den elektrischen Anschlußstellen des Elementes ein Schaltelement angeordnet, das während des Öffnens der Kontaktstellen oder während des Einschaltens des Schutzschalters wenigstens kurzzeitig angetrieben vom Schaltschloß oder von einem Kupplungselement zwischen dem Schaltschloß und den Kontaktstellen schließt und so die Anschlußstellen des Elementes wenigstens kurzzeitig kurzschließt. Dadurch wird der Kondensator entladen und der Schutzschalter ist wieder betriebsbereit.

In bevorzugter Weise kann das Element ein piezokeramischer Streifenbieger oder ein piezokeramischer Scheibenbieger sein, der auch in Multi-Layer-Technik ausgeführt sein kann.

Die Eigenschaften piezokeramischer Scheiben- oder Streifenbieger sind insbesondere aus der Literaturstelle "Physik in unserer Zeit", 1976, Seite 48 folgende bekannt geworden. Dort sind auch piezoelektrische Relais beschrieben, bei denen ein Biegestreifen auf eine omegaförmige Schnappfeder wirkt, dergestalt, daß an den Enden des Biegestreifens angeordnete Kontaktfedern mit je einem festen Kontakt in der einen bzw. in der anderen Stellung in Berührung gelangen. Nicht beschrieben sind Fehlerstromschutzschalter, bei denen der Auslöser ein solches piezokeramisches Element aufweist.

Ein elektrischer Schnellschalter, bei dem ein Piezoelement verwendet wird, ist aus der EP 0 412 401 A2 bekannt geworden. Das Piezoelement wirkt beim Anlegen einer Spannung auf eine Klinkenrolle, die mit einer Auslöserolle zusammenwirkt. Sobald der als Piezoelement ausgebildete Elogator die Klinkenrolle wegdrückt, verlagert sich die Auslöserolle unter der Kraft einer Feder und öffnet die Kontaktstelle. Diese Anordnung ist kompliziert und technisch aufwendig. Das Problem, daß das Piezoelement ein Kondensator ist, der nach einer Auslösung entladen werden muß, wird in dieser Druckschrift mit keinem Wort angesprochen.

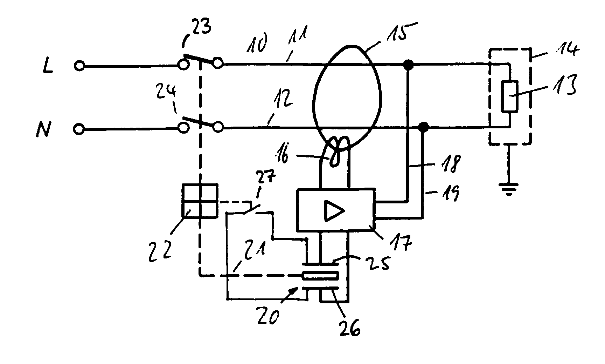

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigt:

Die einzige Figur eine schematische Darstellung einer Schaltungsanordnung für einen Fehlerstrom- bzw. Differenzstromschutzschalter.

Ein Leitungsnetz 10 besteht aus einem Hinleiter 11 und einem Rückleiter 12, zwischen denen ein Verbraucher 13 sich befindet, der in einem Gehäuse 14 untergebracht ist, welches geerdet ist. Die Hin- und Rückleiter 11, 12 sind durch einen Ringkernwandler 15 als Primärwicklung hindurchgeführt, dessen Sekundärwicklung 16 mit einem Differenzstromsensor 17 verbunden ist, der über Zuführungsleitungen 18 und 19 mit den Netzleitern 11 bzw. 12 verbunden ist.

Der Differenzstromsensor ist mit einem als Streifenbieger ausgebildeten piezokeramischen Element 20 verbunden, welches über die strichlierte Linie 21 auf ein Schaltschloß 22 wirkt, das Kontaktstellen 23 bzw. 24 in den Netzleitern 11 und 12 betätigt.

Das piezokeramische Element 20, das als Streifen- oder auch Scheibenbieger ausgebildet ist, wirkt auf die Verklinkung des Schaltschlosses 22. Der Streifenbieger 20 soll dabei so ausgebildet sein, daß er für den Bereich einer dauernd zulässigen Berührungsspannung von 50 Volt bis zu einer Nennspannung von 230 Volt funktionsfähig ist. Der Verstärker im Differenzstromsensor 17 kann einfach und kostengünstig ausgeführt sein.

Durch die erfindungsgemäße Ausgestaltung entfällt ein technisch schwieriger Auslöser, wobei kleine Abmessungen möglich sind. Der Sensor 17 kann kostengünstig erstellt werden und darüberhinaus kann auch die Verlustleistung durch den Verstärker, der sich im Sensor 17 befindet, reduziert werden.

Das piezokeramische Element 20 besitzt elektrische Anschlußstellen 25 und 26, die mit dem Differenzstromsensor 17 verbunden sind. Parallel zu den Anschlußstellen 25 und 26 befindet sich ein elektrisches Schaltelement 27, das von dem Schaltschloß 22 betätigt wird und beim Ausschalten der Kontaktstellen 23 und 24 während des Ausschaltvorganges der Kontaktstellen 23 und 24 oder während deren Einschaltung die beiden Anschlußstellen 25 und 26 kurzschließt, um auf diese Weise das als Kondensator wirkende piezokeramische Element 20 zu entladen.

## Patentansprüche

1. Fehlerstrom- und/oder Differenzstromschutzschalter, mit einem Summenstromwandler, der einen Wandlerkern, eine diesem zugeordnete, durch wenigstens einen Hin- (11) und einen Rückleiter (12) eines abzusichernden Netzes (10) gebildete, den Wandlerkern durchgreifende Primärwicklung (15) und eine Sekundärwicklung (16) aufweist, mit einem Auslöser (20), der durch ein von der Sekundärwicklung (16) aufgrund einer Stromdifferenz zwischen den Strömen in dem Hin- (11) und Rückleiter (12) abgegebenes sekundärseitiges Signal unter Zwischenfügung eines Differenzstromsensors (17) mit darin enthaltenem Verstärker angesteuert wird, und mit einem vom Auslöser (20) betätigten Schaltschloß (22), mit dem in den Netzleitern befindliche Kontaktstellen (23, 24) geöffnet werden, dadurch gekennzeichnet, daß der Auslöser (20) ein Element aus elektrostriktivem Material aufweist, dessen eines Ende ortsfest eingespannt ist und dessen anderes Ende aufgrund des sekundärseitigen Signales seine Lage verändert, und daß elektrisch parallel zu den elektrischen Anschlußstellen (25, 26) des Elementes (20) ein während des Öffnungsvorganges der Kontaktstellen (23, 24) oder während der Einschaltung (Schließen der Kontaktstellen) wenigstens kurzzeitig schließendes Schaltelement (27) angeordnet ist, das vom Schaltschloß (22) oder von einem Kupplungselement zwischen dem Schaltschloß und den Kontaktstellen angetrieben ist, und die Anschlußstellen (25, 26) des Elementes (20) wenigstens kurzzeitig kurzschließt.

2. Fehlerstromschutzschalter nach Anspruch 1, dadurch gekennzeichnet, daß das Element (20) ein piezokeramischer Streifen- oder Scheibenbieger ist.

## Claims

1. Residual-current-operated and/or differential-current-operated circuit-breaker having a total-current transformer which has a transformer core, a primary winding (15), which is assigned to said transformer core, is formed by at least one outgoing conductor (11) and one return conductor (12) of a network (10) to be protected against short circuits, and penetrates the transformer core, and a secondary winding (16), having a tripping device (20) which is driven by a signal on the secondary side which is output by the secondary winding (16) on the basis of a current difference between the currents in the outgoing conductor (11) and return conductor (12) with the interposition of a differential-current sensor (17) with an amplifier contained therein, and having a latching mechanism (22) which is operated by the tripping device (20) and by means of which contact points (23, 24) located in the phase conductors are opened, characterized in that the tripping device (20) has an element made from electrostrictive material, one end of which is fixedly clamped and the other end of which alters its position on the basis of the signal on the secondary side, and in that there is arranged electrically in parallel with the electrical connecting points (25, 26) of the trip element (20) a switch element (27), which closes at least briefly during the opening operation of the contact points (23, 24) or during the making operation (closing of the contact points), is driven by the latching mechanism (22) or by a coupling element between the latching mechanism and the contact points, and short-circuits at least briefly the connecting points (25, 26) of the trip element (20) .

2. Residual-current-operated circuit-breaker according to Claim 1, characterized in that the trip element (20) is a piezoceramic strip-type or disc-type bending element.

## Revendications

1. Disjoncteur à courant de défaut et/ou à courant différentiel, comprenant un transformateur de courant de sommation qui présente un noyau de transformateur, un enroulement primaire (15) associé à ce noyau, traversant ce dernier et constitué par au moins un conducteur aller (11) et un conducteur de retour (12) d'un réseau (10) à protéger, et un enroulement secondaire (26), un déclencheur (20) qui, par un signal émis par l'enroulement secondaire (16), en raison d'une différence entre les courants dans le conducteur aller (11) et le conducteur de retour (12), est commandé, par l'intermédiaire d'un détecteur de courant différentiel (17) avec amplificateur incorporé, et une serrure de commutation (22) qui est actionnée par le déclencheur (20) et par laquelle les contacts (23,24) se trouvant dans les conducteurs de réseau sont ouverts, *caractérisé par le fait* que le déclencheur (20) présente un élément en un matériau électrostrictif, dont une extrémité est encastrée et dont l'autre extrémité change de positon sous l'effet du signal secondaire, et qu'électriquement en parallèle avec les bornes électriques (25,26) de l'élément (20), il est prévu un élément de commutation (27) se fermant au moins brièvement pendant l'opération d'ouverture des contacts (23,24) ou pendant la fermeture du disjoncteur (fermeture des contacts), cet élément étant entraîné par la serrure de commutation (22) ou par un élément d'accouplement entre la serrure de commutation et les contacts, pour court-circuiter au moins brièvement les bornes (25,26) de l'élément (20).

2. Disjoncteur à courant de défaut suivant la revendication 1, caractérisé par le fait que l'élément (20) est constitué par un élément de flexion piézocéramique en forme de bande ou de disque.
